# EUROPÄISCHE PATENTSCHRIFT

(11) **EP 1 275 027 B1**
(45) Veröffentlichungstag und Bekanntmachung des Hinweises auf die Patenterteilung: **25.02.2004**
(21) Anmeldenummer: 01940184.3
(22) Anmeldetag: 17.04.2001
(51) Int. Cl.: G03B 13/24, G03B 19/20

(54) **VORRICHTUNG IN ABBILDENDEN OPTISCHEN SYSTEMEN EINER LAUFBILD-FILMAUFNAHMEKAMERA**
DEVICE IN OPTICAL REPRESENTATION SYSTEMS OF A MOTION PICTURE OR MOVIE CAMERA
DISPOSITIF INSTALLE DANS DES SYSTEMES DE REPRESENTATION OPTIQUES D'UNE CAMERA DE PRISE DE VUES

(30) Priorität: 17.04.2000 DE 10020307
(43) Veröffentlichungstag der Anmeldung: 15.01.2003
(73) Patentinhaber: ARNOLD & RICHTER CINE TECHNIK GMBH & CO. BETRIEBS KG, 80799 München (DE)
(72) Erfinder: JACUMET, Klaus, 80992 München (DE)
(74) Vertreter: Ninnemann, Detlef, Dipl.-Ing.
(86) Internationale Anmeldenummer: PCT/DE2001/001519
(87) Internationale Veröffentlichungsnummer: WO 2001/081995

(56) Entgegenhaltungen:
- CH-A- 617 274
- DE-A- 3 937 885
- DE-A- 4 200 561
- US-A- 4 693 577
- US-A- 5 802 406

## Beschreibung

Die Erfindung bezieht sich auf eine Vorrichtung in abbildenden optischen Systemen einer Laufbild-Filmaufnahmekamera gemäß dem Oberbegriff des Anspruchs 1.

Zur visuellen Beurteilung eines aufzunehmenden Bildes oder Motivs, insbesondere zur Beurteilung der Bildschärfe, sind sogenannte Einstellscheiben in Form von Mattscheiben oder Faserplatten im Sucher- oder Videostrahlengang einer Laufbild-Filmaufnahmekamera bekannt. Mattscheiben werden für diesen Anwendungszweck entweder durch einen Schleifprozeß oder einen chemischen Ätzprozeß mattiert. Faserplatten werden dagegen aus einem Bündel einzelner, parallel ausgerichteter lichtleitender Fasern hergestellt.

Beide Arten von Einstellscheiben weisen eine Struktur auf, was insbesondere bei kleinformatigen Bildern, wie sie bei Filmaufnahmen üblich sind, störend ist Zwar können diese Strukturen im Falle einer Mattscheibe durch Verwenden eines besonders feinen Schleifkorns beim Schleifprozeß vermindert werden, jedoch wird dadurch die Mattscheibe zu transparent, wodurch die Beurteilung der optimalen Scharfeinstellung erschwert und die Bildhelligkeit ungleichmäßig wird. Die gleichen Nachteile treten bei Mattscheiben auf, die zur Verringerung der Körnigkeit auf ihrer matten Oberfläche mit einem transparenten Lack beschichtet werden.

Faserplatten haben gegenüber Mattscheiben den Vorteil, daß die Struktur geringer ist, sie sind jedoch teurer als Mattscheiben und lassen insbesondere bei kleineren Aperturen des abbildenden Objektivs eine regelmäßige, meist wabenförmige Struktur erkennen, die die künstlerische Beurteilung des Bildes oder Motivs stört.

Die in den Einstellscheiben zu sehenden Strukturen werden umso deutlicher erkennbar, je mehr das Aufnahmeobjektiv der Filmkamera abgeblendet wird. Dabei wirken Mattscheiben wie mit Ruß geschwärzt.

Zur Verringerung der auftretenden, störenden Strukturen, d.h. der Körnigkeit sowie der wabenförmigen Struktur ist aus der deutschen Patentschrift 2016 183 ein Durchlichtbildschirm bekannt, der aus zwei Platten besteht, zwischen denen ein elastisches, durchsichtiges Kittmaterial angeordnet ist, das eine mindestens teilweise an beiden streuenden Oberflächen anliegende Schicht bildet Die Platten sind mit einer Antriebsvorrichtung verbunden, die die Platten gegeneinander mit einer Frequenz bewegt, die deutlich über dem zeitlichen Auflösungsvermögen der Augen von etwa 60 Hz liegt. Mit Hilfe einer solchen Anordnung kann die Erscheinung der Körnigkeit und der wabenförmigen Struktur unterbunden oder zumindest deutlich reduziert werden.

Für eine umfassende visuelle Beurteilung der Bildqualität ist es jedoch erforderlich, auf einer lichtdurchlässigen Einstellscheibe eine Bildfeldmarkierung vorzusehen, die die äußeren Grenzen des aufzunehmenden Bildes oder Motivs angibt und die in Form einer Formateinzeichnung auf der Oberfläche der Einstellscheibe vorgesehen ist. Zur besseren Erkennbarkeit der Bildfeldmarkierungen bei einer geringen, durch das Kameraobjektiv gelangenden Lichtmenge kann die Formateinzeichnung direkt oder indirekt durch eine in der Kamera angeordnete Lichtquelle beleuchtet werden, so daß auch bei ungünstigen Lichtverhältnissen die Markierung im Sucherfenster der Kamera für die Bedienungsperson sichtbar bleibt

Eine Verminderung bzw. Beseitigung der Strukturen bei Mattscheiben und Faserplatten durch Bewegen der Einstellscheibe führt aber zu einem Verwischen der Bildfeldmarkierung infolge der bewegten Einstellscheibe und damit zu einer mangelhaften Erkennbarkeit der Bildfeldgrenzen. Auch die Kombination von aus miteinander verkitteten Platten gebildeten Einstellscheiben mit einer Bewegung dieser Einstellscheiben führt zu einer mangelhaften Beurteilung der Bildqualität, d.h. der Bildfeldbegrenzung und der Bildschärfe, so daß entweder eine erhöhte Erkennbarkeit der Körnigkeit oder eine mangelhafte Erkennbarkeit der Bildfeldmarkierung in Kauf genommen werden muß.

Aus der US-A-5802406 ist ein fotografisches System für einen Kamerasucher mit einer Fokussierungsscheibe bekannt, die in der Abbildungsebene einer Objektivlinse angeordnet ist und einen semitransparenten Abschnitt aufweist, der einen rechteckförmigen, von einem Rahmen umgebenen, vollständig lichtdurchlässigen fotografischen Bereich umgibt, auf dem das Aufnahmeobjekt abgebildet wird. Innerhalb des vollständig lichtdurchlässigen fotografischen Bereichs ist ein kreisförmiger fotometrischer Bereich angeordnet, der den von einer fotometrischen Einrichtung analysierten Bereich wiedergibt. Der lichtdurchlässige fotografische Bereich, der fotometrische Bereich und eine die Mitte des lichtdurchlässigen fotografischen Bereichs angebende Markierung sind als Bildfeldmarkierungen auf der Fokussierungsscheibe angeordnet.

Aus der CH-A-617274 ist ein Kamerasucher bekannt, der im reflektierten Strahlengang einer rotierenden Blende angeordnet ist, die den Aufnahmestrahlengang abwechselnd für die Belichtung eines Laufbildfilmes freigibt bzw. in den Sucherstrahlengang ablenkt. Der Kamerasucher enthält eine Mattscheibe, die auf der einen Seite eine matte Oberfläche und auf der anderen Seite ein Linienmuster aus lichtreflektierendem Material zur Bildfeldbegrenzung aufweist. Der Sucher enthält ein Okular und einen Strahlenteiler, der den durch die Mattscheibe tretenden Aufnahmestrahlengang zum Okular reflektiert. Weiterhin ist im Sucher eine Lampenanordnung vorgesehen, mittels der Licht durch den Strahlenteifer auf das lichtreflektierende Material gerichtet wird, wobei das von dem lichtreflektierenden Material reflektierte Licht auf den Strahlenteiler zurückfällt und von diesem dem Okular zugeleitet wird.

Der vorliegenden Erfindung liegt die Aufgabenstellung zugrunde, eine Vorrichtung in abbildenden optischen Systemen einer Laufbild-Filmaufnahmekamera zu schaffen, die die Bildqualität an Einstellscheiben verbessert, eine optimale Beurteilung eines auf der Einstellscheibe (Mattscheibe oder Faserplatte) abgebildeten Bildes ohne Rußeffekte, störende Körnigkeit oder wabenförmige Strukturen ermöglicht, eine einwandfreie Erkennung von Bildfeldbegrenzungen gewährleistet und Interferenzerscheinungen vermeidet und damit eine einwandfreie Bildbetrachtung ohne störende Nebeneffekte sicherstellt.

Diese Aufgabe wird erfindungsgemäß durch eine Vorrichtung mit den Merkmalen des Anspruchs 1 gelöst.

Die erfindungsgemäße Lösung verbessert die Bildqualität an Einstellscheiben in abbildenden optischen Systemen einer Laufbild-Filmaufnahmekamera, gewährleistet eine optimale Beurteilung eines auf der Einstellscheibe (Mattscheibe oder Faserplatte) abgebildeten Bildes ohne Rußeffekte, störende Körnigkeit oder wabenförmige Strukturen sowie eine einwandfreie Erkennung von Bildfeldbegrenzungen, vermeidet Interferenzerscheinungen und stellt damit eine einwandfreie Bildbetrachtung ohne störende Nebeneffekte sicher.

Die erfindungsgemäße Lösung eignet sich insbesondere auch für Videoausspiegelungen in Laufbild-Filmaufnahmekameras, da die mit der Erfindung erzielbare Verbesserung der Bildqualität einer Einstellscheibe in einem normalen Sucher zwar gut erkennbar ist, sich in einer Videoausspiegelung aber am deutlichsten bemerkbar macht und Interferenzerscheinungen sowie das Auftreten von Flickereffekten vermeidet.

Um Parallaxenfehler zu vermeiden, ist nach einem weiterführenden Merkmal der Erfindung der Abstand zwischen der beweglichen Scheibe und der stationären Scheibe minimal.

Eine vorteilhafte . Ausgestaltung der erfindungsgemäßen Lösung ist dadurch gekennzeichnet, daß die bewegliche Scheibe so gelagert ist, daß sie ausschließlich in ihrer Scheibenebene beweglich ist.

Durch eine exakte Führung der beweglichen Scheibe in der Ebene wird vermieden, daß infolge eines Abweichens der Scheibe in Strahlenrichtung das Kameraobjektiv nicht mehr richtig fokussiert oder falsch eingestellt wird.

Ergänzend hierzu kann die mit der beweglichen Scheibe verbundene Antriebseinrichtung die bewegliche Scheibe mit einer von der Helligkeit des aufzunehmenden Bildes oder Motivs abhängigen Frequenz bewegen. Da die Helligkeit die Öffnung der Kamerablende beeinflußt und bei niedrig geöffneter Blende der sogenannte Rußeffekt stärker auftritt, kann bei weit geöffneter Aufnahmeblende die Bewegungsfrequenz der bewegten Scheibe herabgesetzt werden, ohne daß Einbußen bei der Qualität der Bildbetrachtung hingenommen werden müssen.

Vorzugsweise ist die bewegliche Scheibe in ihrer Scheibenebene beweglich gelagert und führt eine exzentrische, insbesondere eine unregelmäßige Bewegung aus. Die Unregelmäßigkeit der Bewegung der beweglichen Scheibe vermeidet zum einen Umkehrpunkte einer oszillierenden Bewegung, an denen die Körnigkeit wieder zu beobachten ist, und zum anderen kann nicht infolge periodischer Wiederkehr von Bildpunkten auf dieselbe Stelle der Mattscheibe oder Faserplatte eine erneute Erkennbarkeit von Körnungen auftreten.

In einer vorteilhaften Ausgestaltung der erfindungsgemäßen Lösung führt die bewegliche Scheibe eine Bewegung aus, die aus der Überlagerung von zwei in zueinander senkrechten Richtungen verlaufenden, periodischen Bewegungen resultiert, d.h. sogenannte Lissajoussche Figuren beschreibt

Alternativ hierzu führt die bewegliche Scheibe eine Bewegung aus, die der Bewegung einer Schwinge eines Viergelenkgetriebes gleicht.

Weiterhin kann die Bewegungsfrequenz der Antriebseinrichtung zeitlich oder geschwindigkeitsmäßig mit der Bildfrequenz der Filmkamera oder der Videofrequenz einer Videoausspiegelungseinrichtung der Filmkamera gekoppelt werden, wobei vorzugsweise die Bewegungsfrequenz in einem nicht ganzzahligen Verhältnis zur Bildfrequenz der Filmbildkameraoder Videofrequenz der Videoausspiegelungseinrichtung steht.

Durch diese Maßnahme wird die Gefahr des Auftretens von Interferenzerscheinungen oder periodisch wiederkehrender Stellungen vermieden und damit die Bildbetrachtung ohne störende Nebeneffekte optimiert.

Bezüglich der Art der Bewegung der beweglichen Scheibe ist es unerheblich, ob innerhalb eines Zeitraums, an dem Licht im Sucherstrahlengang zur Verfügung steht, die bewegliche Scheibe nur einen Teil einer vollen Bewegung oder sogar mehrere volle Bewegungen ausführt, solange die Einstellscheibe innerhalb der Wahrnehmungsgrenzen des menschlichen Auges oder einer ggf. im Sucherstrahlengang angeordneten Videoausspiegelungseinrichtung über einen Abstand von einem Korn zum nächsten auf einer Mattscheibe oder von einer Faser zur nächsten auf einer Faserplatte bewegt wird.

Eine vorteilhafte Ausgestaltung der erfindungsgemäßen Lösung ist dadurch gekennzeichnet, daß die bewegliche Scheibe zumindest zeitweise von der Antriebseinrichtung bewegt wird.

Da der Bildeindruck vor allem im Bereitschaftszustand ("Standby-Modus") der Filmkamera relevant ist, wird in einer Ausgestaltung der erfindungsgemäßen Lösung die bewegliche Scheibe im "Standby-Modus" der Filmkamera bewegt und während der Bildaufnahme ("Run-Modus") der Filmkamera angehalten, so daß die Kamerageräusche minimiert werden. Dies erweist sich insbesondere bei sogenannten "Sound-Sync-Kameras" als vorteilhaft.

Eine weitere Ausgestaltung der erfindungsgemäßen Lösung ist dadurch gekennzeichnet, daß die bewegliche Scheibe unabhängig vom Betriebszustand der Filmkamera mit einer hohen Bewegungsfrequenz bewegt wird, was bei sogenannten "Non-Sound-Sync-Kameras" eine durchaus befriedigende Lösung darstellt.

Die Antriebseinrichtung für die bewegliche Scheibe kann auf unterschiedliche Weise realisiert werden. So besteht die Möglichkeit, die Antriebseinrichtung über eine Getriebeeinrichtung mit dem Filmtransportmechanismus der Filmkamera zu verbinden oder mit einem Blendenantrieb für eine rotierende Spiegelblende einer Filmkamera zu koppeln.

Weiterhin kann die Antriebseinrichtung aus mindestens einem mit der beweglichen Scheibe mittelbar oder unmittelbar verbundenen Exzentermotor bestehen.

Als Alternative zum Exzentermotor kann wahlweise ein mit einer Seitenkante der beweglichen Scheibe verbundenes Piezoelement, eine Schubstange oder ein Hubmagnet als Antriebseinrichtung vorgesehen werden oder eine bewegliche, mit metallischen oder magnetischen Teilen verbundene Scheibe in einem induktiven oder kapazitiven Feld angeordnetwerden, so daß durch entsprechende Anregung die beweglicheScheibe Bewegungen ausführt, die durch die Feldänderungenvorgegeben werden.

Bei einer Zusammensetzung der Einstellscheibe aus zwei zueinander parallelen, lichtdurchlässigen Platten, die mit einem Kittmaterial miteinander verbunden sind, greift die Antriebseinrichtung an dieser in Sandwich-Bauweise zusammengesetzten Einstellscheibe an, während eine die Bildfeldmarkierungen tragende Einstellscheibe stationär im Bildfeldbereich der beweglichen Scheibe angeordnet ist.

In einer weiteren Ausführungsform können die bewegliche Scheibe und die stationäre Scheibe mit Bildfeldmarkierung aus zueinander parallelen, lichtdurchlässigen Platten bestehen, zwischen denen sich ein optisches Medium in Form eines Gases, einer Flüssigkeit oder eines elastischen Festkörpers befindet.

In dieser Ausführungsform greift die Antriebseinrichtung an der beweglichen Scheibe an, während die andere Scheibe ortsfest angeordnet ist. Über das optische Medium können die Scheiben Relativbewegungen zueinander ausführen.

Diese Lösung erweist sich als besonders platzsparend, und durch Integration der die Körnigkeit herabsetzenden Maßnahmen wird die gestellte Aufgabe mit einer äußerst kompakten und effektiven Vorrichtung zur Verbesserung der Bildqualität an Einstellscheiben in abbildenden optischen Systemen einer Filmkamera oder einer Videoausspiegelungseinrichtungeiner Filmkamera gelöst.

Die Verbindung der Platten oder Scheiben erfolgt im wesentlichen vollflächig über die Oberflächen der Platten mit einem lichtdurchlässigen optischen Medium. Hierdurch findet die Brechung an der mattierten Oberfläche der Platten nicht gegenüber Luft, sondern gegenüber dem optischen Medium statt und das Streuverhalten der mattierten Oberflächen kann über die entsprechende Auswahl des optischen Mediums beeinflußt und optimal auf den jeweiligen Einsatz abgestimmt werden.

Bevorzugt weist das Material der Platten oder Scheiben einen wenigstens um einen Faktor 1,1, insbesondere einen um einen Faktor 1,15 bis 1,3 höheren Brechungsindex als das optische Medium auf.

Zur Erkennbarkeit der Bildfeldmarkierung der stationären Scheibe auch bei schlechten Belichtungsverhältnissen ist eine kamerainterne Lichtquelle vorgesehen, die die stationäre Scheibe anstrahlt.

Die Reihenfolge der optisch wirksamen Elemente der erfindungsgemäßen Vorrichtung ist ebenso wie die jeweiligen Seiten der optisch wirksamen Elemente für den gewünschten Effekt grundsätzlich beliebig, weist aber in Abhängigkeit von der Reihenfolge spezifische Vorteile auf.

So ist in einer ersten Anordnung die bewegliche Scheibe mit ihrer unmattierten Seite dem Kameraobjektiv zugewandt, während die stationäre Scheibe mit ihrer Formateinzeichnung der mattierten Seite der beweglichen Scheibe zugewandt ist. Mit dieser Anordnung ist der kürzeste Abstand zwischen der Mattscheibenebene und der Formateinzeichnung zu erzielen.

In einer zweiten Anordnung ist die bewegliche Scheibe mit ihrer mattierten Seite dem Kameraobjektiv und die stationäre Scheibe mit ihrer Formateinzeichnung der unmattierten Seite der beweglichen Scheibe zugewandt.

Bei dieser Anordnung ist zwar der Abstand zwischen der Mattscheibenebene und der Formateinzeichnung um eine Glasplattendicke größer, dafür kann aber das Auflagemaß, d.h. der Abstand zwischen der Objektivbefestigung und dem Bildfenster der Kamera einfacher gemessen werden.

Schließlich kann die mit ihrer normalen Glasseite dem Kameraobjektiv zugewandte stationäre Scheibe mit ihrer die Formateinzeichnung tragenden Seite der mattierten Seite der beweglichen Scheibe zugewandt sein.

Hierdurch ergibt sich die Möglichkeit einer einfacheren Austauschbarkeit der Formateinzeichnungen.

Anhand von in der Zeichnung dargestellten Ausführungsbeispielen soll der der Erfindung zugrunde liegende Gedanke näher erläutert werden. Es zeigen:
- Fig. 1: - eine teilweise geschnittene Seitenansicht einer Laufbild-Filmaufnahmekamera;
- Fig. 2: - eine schematische Darstellung des Fihnaufilahme-Strahlengangs, davon abgezweigter Sucher- und Videostrahlengänge sowie der optischen Elemente im Filmaufnahme-, Sucher-und Videostrahlengang;
- Fig. 3: - einen Schnitt durch eine stationäre Scheibe bisheriger Bauart mit Bildfeldmarkierung sowie eine Draufsicht auf die Bildfeldmarkierung;
- Fig. 4: - eine schematische Darstellung einer Vorrichtung zur Bildprojektion mit voneinander getrennter beweglicher und stationärer Scheibe;
- Fig. 5: - eine schematische Darstellung einer Vorrichtung zur Bildprojektion mit in Sandwichbauweise zusammengefaßter beweglicher und stationärer Scheibe;
- Fig. 6: - eine schematische Darstellung einer Vorrichtung zur Bildprojektion mit oberhalb der beweglichen Scheibe angeordneter, als Feldlinse ausgebildeter stationärer Scheibe;
- Fig. 7: - eine schematische Darstellung einer Vorrichtung zur Bildprojektion mit beweglicher und stationärer Scheibe ohne dazwischen angeordnetem optischem Medium;
- Fig. 8: - eine Seitenansicht einer Vorrichtung zur Bildprojektion mit einer beweglichen und einer stationären Scheibe und zwei Exzentermotoren als Antriebseinrichtung;
- Fig. 9: - eine Draufsicht auf die Vorrichtung zur Bildprojektion gemäß Figur 8;
- Fig. 10: - eine Teilansicht einer Antriebseinrichtung mit einem Piezoclement;
- Fig. 11: - eine Draufsicht auf eine Antriebseinrichtung mit zwei Hubmagneten und
- Fig. 12: - ein schematisches Blockschaltbild einer Anordnung zur Steuerung der Belichtungs- und Transportgeschwindigkeit eines Laufbildfilmes und der Bewegungsgeschwindigkeit einer Vorrichtung zur Bildprojektion.

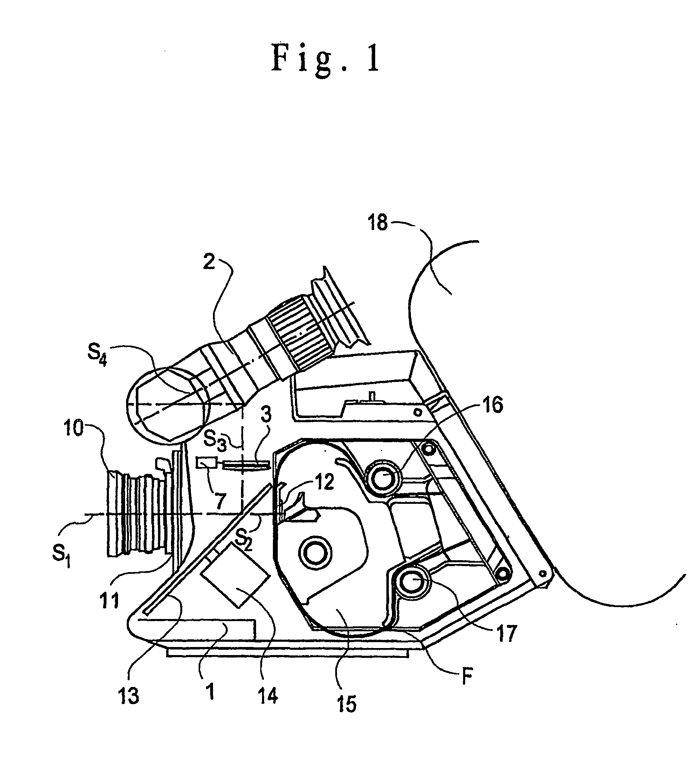

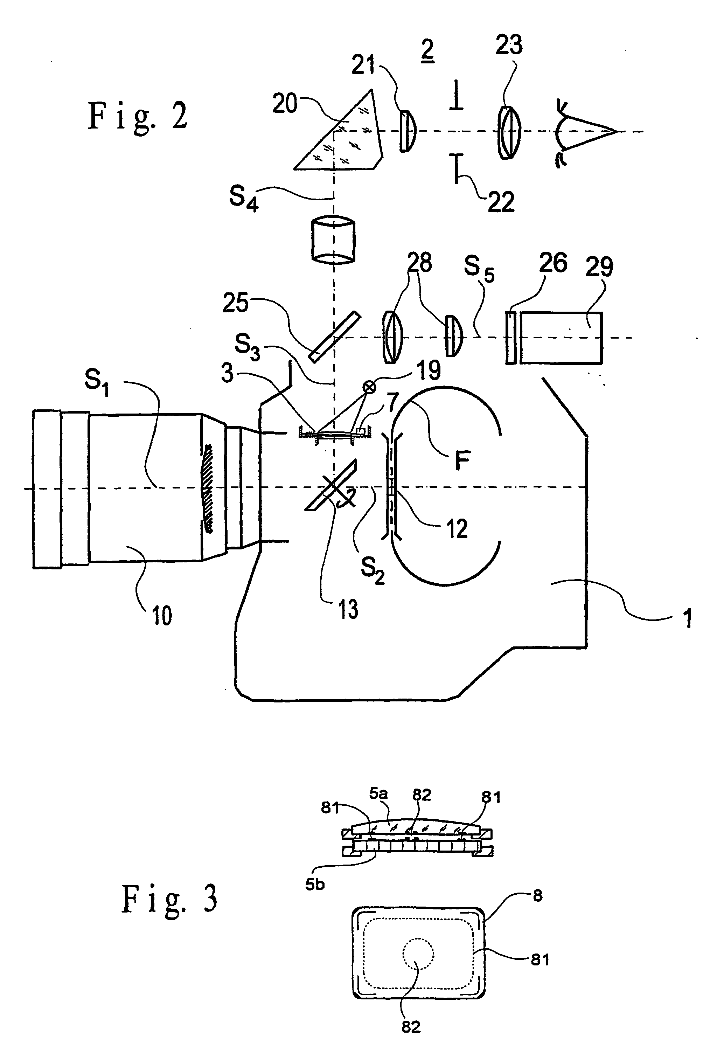

Fig. 1 zeigt eine teilweise geschnittene Seitenansicht einer Laufbild-Filmaufnahmekamera und Fig. 2 eine schematische Darstellung der Strahlengänge der Laufbildkamera mit einer Sucherlupenoptik und einer Video-Ausspiegelung. Die Laufbildkamera weist ein in der Darstellung teilweise geschnittenes Kameragehäuse 1 mit einer daran befestigten Kamerakassette 18 auf, in der eine Filmabwickelspule und eine Filmaufwickelspule angeordnet sind. Am Kameragehäuse 1 ist ein Objektivträger 11 zur Festlegung von Wechselobjektiven an der Filmkamera ausgebildet. In der optischen Achse des Objektivs 10 ist ein Bildfenster 12 im Kameragehäuse 1 angeordnet, an dem ein Laufbildfilm F intermittierend vorbeibewegt wird.

Das Kameragehäuse 1 enthält weiterhin eine Filmtransporteinrichtung 15 für ein Greiferschaltwerk der Filmkamera sowie für Zahnrollen 16, 17 zum Abzug und Rücktransport des Laufbildfilmes F aus der bzw. in die Kamerakassette 18.

Eine von einem Blendenmotor 14 angetriebene rotierende Spiegelblende 13 gibt den durch das Objektiv 3 einfallenden Filmaufnahme-Strahlengang S1 periodisch als Filmbelichtungs-Strahlengang S2 zur Belichtung eines im Bildfenster 12 stehenden Filmbildes des Laufbildfilmes F frei bzw. reflektiert den Filmaufnahme-Strahlengang S1 während des Filmtransports als Ausspiegelungs-Strahlengang S3 zu einem Strahlenteiler 25, von dem ein Sucherstrahlengang S4 zu einem Sucherokular 2 und ein Videostrahlengang S5 zu einem Videoaufnahmegerät oder CCD-Videochip abzweigt.

Der optische Weg vom Objektivträger 11 zum Bildfenster 12 bzw. zum Film F und der optische Weg vom Objektivträger 11 zur mattierten Fläche der Mattscheibe ist gleich. Das dort in der Belichtungspause für den Laufbildfilm F entworfene Bild wird gemäß Fig. 2 an einem Strahlenteiler 25 in einen Sucherstrahlengang S4 und einen Videostrahlengang S5 aufgeteilt.

Der Sucherstrahlengang S4 wird mittels eines Umlenkprismas 20 in eine für die Aufnahmeerfordernisse passende Richtung geführt und das Sucherbild von einer Übertragungsoptik 21 als reelles Bild in die Ebene einer Bildfeldblende 22 abgebildet, wo es durch ein Okular 23 betrachtet werden kann. Der Videostrahlengang S5 gelangt durch eine Videooptik 28 auf einen CCD-Bildwandler 26, der mit einer Videoelektronik 29 verbunden ist. Ein von der Videoelektronik 29 abgegebenes Videosignal kann in üblicher Weise weitergeleitet bzw. weiterverarbeitet und beispielsweise einem Monitor, auf dem ein Videobild des Aufnahmeobjekts dargestellt werden kann, oder einem Videoaufzeichnungsgerät zugeführt werden, das die Videoaufnahmen speichert.

An der optisch identischen Ebene wie der Bildebene ist im Ausspiegelungsstrahlengang S3 eine Vorrichtung zur Bildbetrachtung bzw. Bildbeurteilung angeordnet, die aus einer Mattscheibe oder einer Faserplatte 3 besteht und auf die ein Abbild des aufzunehmenden Objekts reflektiert wird, wenn sich die reflekierende Oberfläche der rotierenden Spiegelblende 13 im Filmaufhahme-Strahlengang S1 befindet, während der Filmtransportmechanismus den Laufbildfilm F um ein Filmbild im Bildfenster 12 weitertransportiert

Fig. 3 zeigt einen Querschnitt durch eine Feldlinse 5a sowie einen Querschnitt durch eine Faserplatte 5b alter Bauart mit Bildfeldmarkierungen 81, 82 und in Draufsicht eine für einen Betrachter durch den Sucher 2 gemäß Fig. 1 sichtbare Projektion einer Formateinzeichnung auf ein durch den Sucher 2 sichtbares Sucherbild 8. Das Sucherbild weist eine Bildfeldbegrenzung 81 sowie eine Mittenmarkierung 82 auf, mit deren Hilfe auch bei schlechten Lichtverhältnissen der aufgenommene Bildausschnitt festgelegt werden kann. Zusätzliche Markierungen können unterschiedliche Bildformate wiedergeben, so daß beispielsweise auch für Fernsehaufnahmen geeignete Bildformate markiert werden können.

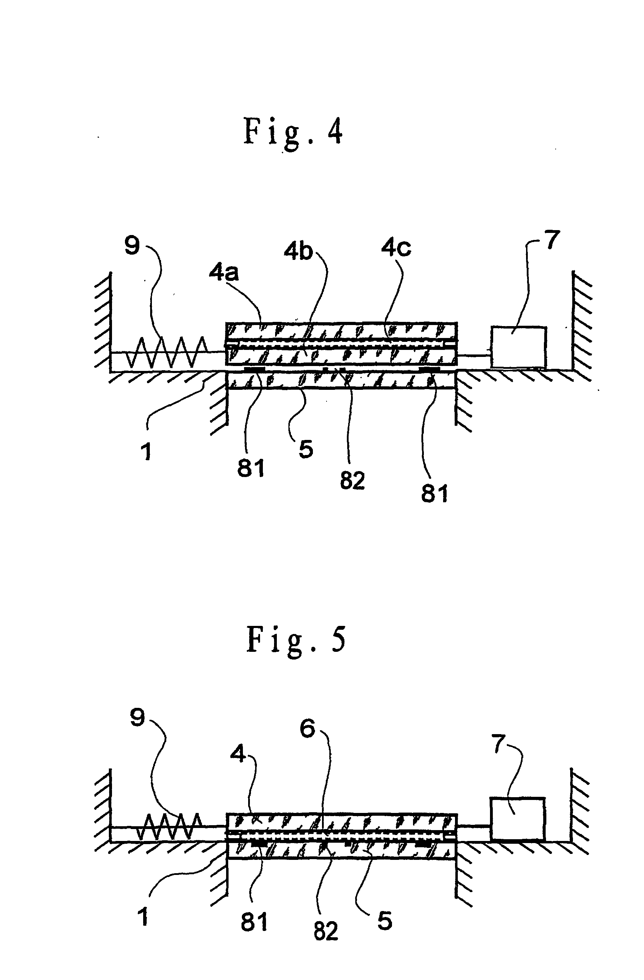

Die Vorrichtung zur Bildbeurteilung 3 setzt sich gemäß der Erfindung entsprechend der Darstellung in Fig. 4 aus einer in ihrer Scheibenebene horizontal beweglichen, mit einer Antriebseinrichtung 7 verbundenen Scheibe 4a, 4b, 4c in Sandwichbauweise und einer stationären, mit dem Kameragehäuse 1 verbundenen auswechselbaren Scheibe 5 mit Bildfeldmarkierungen 81, 82 zusammen. Die bewegliche Scheibe besteht in dieser Ausführungsform aus zwei zueinander parallelen, lichtdurchlässigen Platten 4a, 4b. Eine der beiden innenliegenden Flächen der lichtdurchlässigen Platten 4a, 4b weist eine lichtstreuende Oberfläche auf und zwischen den beiden Platten 4a, 4b ist ein optisches Medium in Form eines Kittmaterials 4c angeordnet.

Bei einer Zusammensetzung der beweglichen Scheibe aus zwei zueinander parallelen, lichtdurchlässigen Platten 4a, 4b bestehen diese vorzugsweise aus Glas, wobei eine der innenliegenden Flächen mattiert ist. Der Vorteil einer innenliegenden mattierten Fläche besteht darin, daß sie gegenüber äußeren Einflüssen sehr unempfindlich ist, während feingeschliffene konventionelle Mattscheiben auf geringe Fett-oder Feuchtigkeitsspuren sehr empfindlich reagieren.

Die Platten 4a, 4b können aber auch aus lichtdurchlässigem Kunststoff oder anderen lichtdurchlässigem Materialien gefertigt sein. Im übrigen brauchen die Platten 4a, 4b nicht aus dem gleichen Material zu bestehen. Auch ist es nicht nötig, daß sie die gleiche Größe aufweisen.

Die Mattierung der Oberfläche einer der Platten 4a oder 4b erfolgt bevorzugt durch Anschleifen, Bestrahlen mit Partikeln oder, wenn die Platten aus Glas bestehen, durch Ätzen mit Flußsäure. Weiterhin möglich ist auch die Beschichtung der Oberflächen mit einer mattierten Schicht, z.B. aus Kunststoff. Darüber hinaus können auch Platten mit Schichten eingesetzt werden, die durch das Einbringen von Streuzentren, zum Beispiel Material mit abweichenden Brechungsindices, mattiert sind.

Die stationäre Scheibe 5 trägt gemäß den Fig. 3 und 4 Bildfeldmarkierungen bzw. Formateinzeichnungen 81, 82 beispielsweise in Form einer Chrommaske. Die Bildfeldmarkierungen 81, 82 können auf der Seite zur mattierten Fläche als Schicht aufgetragen oder in Vertiefungen der stationären Scheibe 5 angeordnet sein.

Wie in Figur 2 dargestellt, kann zusätzlich eine im Kameragehäuse 1 angeordnete Lichtquelle 19 zur Beleuchtung der Bildfeldmarkierung vorgesehen werden, die auch bei schlechten Lichtverhältnissen ein klares Erkennen der Bildfeldbegrenzungen ermöglicht. Die Beleuchtungseinrichtung 15 kann aus einer Leuchtdiode, UV-Lampe oder dgl. bestehen und so angeordnet werden, daß das Sucherbild 8 optimal ausgeleuchtet ist.

Anstelle einer getrennten Anordnung einer beweglichen Scheibe 4a, 4b, 4c in Sandwichbauweise und einer stationären Scheibe 5 kann die Einstellscheibe nicht in Sandwichbauweise vorgesehen werden und aus einer beweglichen Scheibe 4 und einer stationären Scheibe 5 bestehen mit einem optischen Medium 6 zwischen den einander zugewandten Oberflächen der beweglichen Scheibe 4 und der stationären Scheibe 5 wie es in Figur 5 dargestellt ist.

Hierbei erfüllt die bewegliche Scheibe 4 die gleiche Aufgabe wie die beiden die bewegliche Scheibe bildenden Platten 4a, 4b, 4c. In der Kombination von beweglicher Scheibe 4 und stationärer Scheibe 5 sowie dazwischen befindlichem, ausreichend gekapseltem optischen Medium 6 zu einer kombinierten Einstellscheibe ist die stationäre Scheibe 5 ortsfest im Bereich der Bildebene mit dem Kameragehäuse 1 gemäß Figur 1 verbunden, während die bewegliche Scheibe 4 mit einer entsprechenden Antriebseinrichtung 7 verbunden und gegenüber der stationären Scheibe 5 horizontal frei beweglich ist.

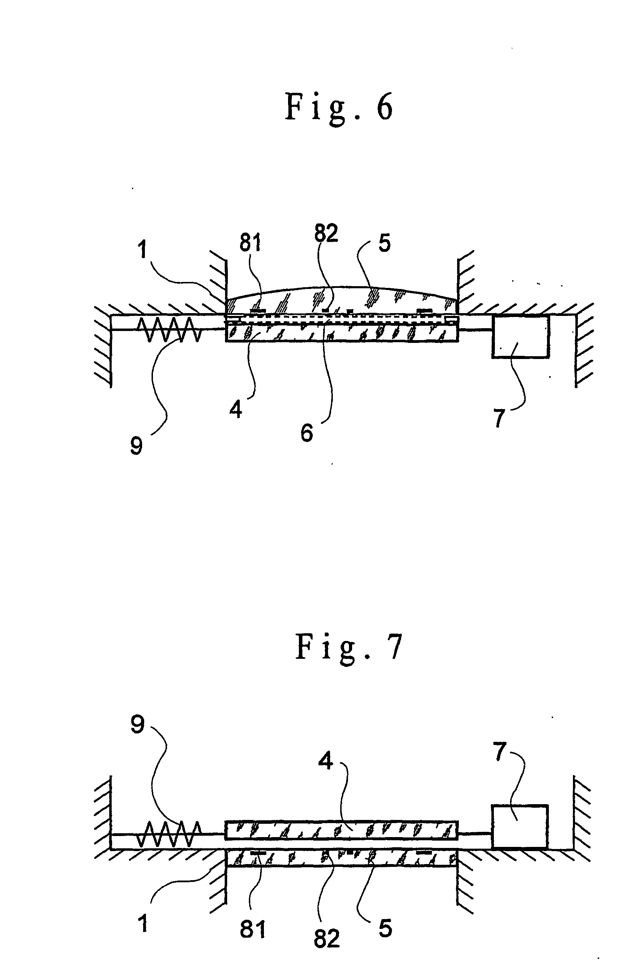

Wesentlich bei der Ausgestaltung der beweglichen und stationären Scheibe ist, daß die bewegliche Scheibe nur aus einer planparallelen Optik besteht, da ansonsten die optische Achse mitbewegt wird, was unangenehm für den Betrachter ist. Liegt die stationäre Scheibe in Betrachtungsrichtung unterhalb der beweglichen Scheibe, muß auch diese planparallel ausgebildet sein. Nur wenn die stationäre Scheibe oberhalb der beweglichen Scheibe liegt, kann in ihr die Funktion einer Feldlinse mit integriert sein, d.h. ihre der Betrachtungsrichtung zugewandte Seite kann - wie in Fig. 6 dargestellt - konvex ausgebildet sein.

In der Anordnung gemäß Fig. 7 ist im Unterschied zu den vorstehend beschriebenen Vorrichtungen zwischen der beweglichen Platte 4 und der statischen Platte 5 kein optisches Medium 6 vorgesehen. Die der statischen Platte 5 zugewandte Seite der beweglichen Platte 4 ist dabei mattiert. Die mattierte Struktur entspricht dem einer normale Mattscheibe, wirkt sich aber aufgrund der Bewegung der beweglichen Platte 4 weniger nachteilig aus. Der Verzicht auf ein optisches Medium führt in diesem Fall zu einem einfachen Aufbau, bei dem das Medium nicht gekapselt werden muß und die statische Platte 5 mit den Formateinzeichnungen einfach ausgetauscht werden kann. Selbstverständlich kann die in Fig. 7 dargestellte Vorrichtung ohne optisches Medium zwischen statischer Platte 5 und beweglicher Platte 4 so aufgebaut werden, daß die statische Platte 5 oben liegt und die gekrümmte obere Fläche einer Feldlinse dort mitintegriert ist.

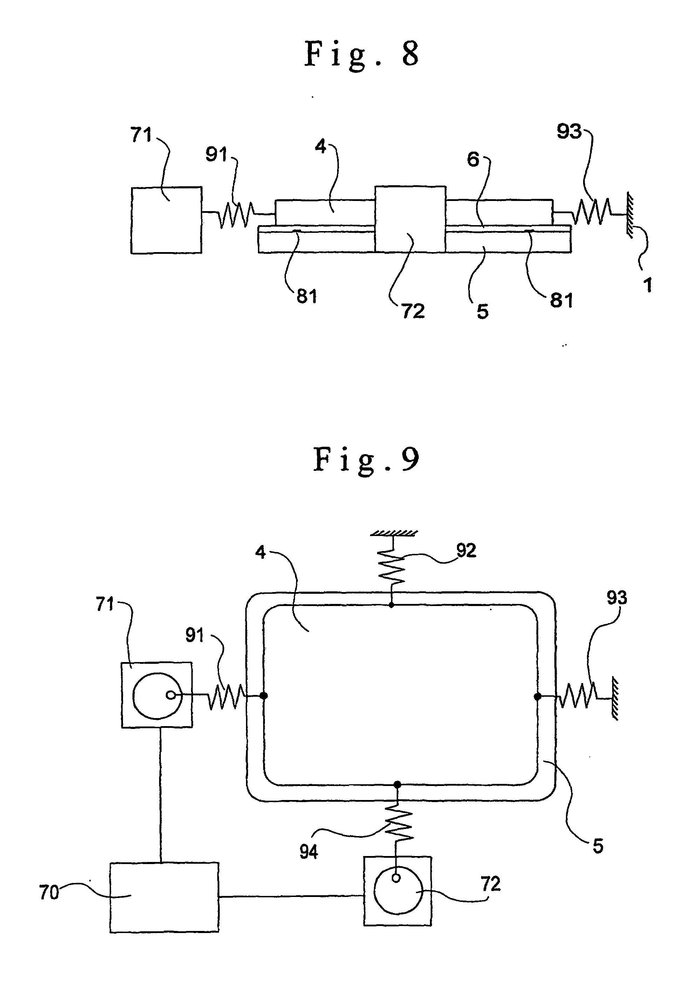

Fig. 8 zeigt schematisch in einer Seitenansicht und Fig. 9 in einer Draufsicht eine Vorrichtung zur Bildbeurteilung in abbildenden optischen Systemen einer Filmkamera mit einer beweglichen Scheibe 4 und einer stationären, ortsfest eingespannten Scheibe 5, die Bildfeldmarkierungen 81 trägt. Die rechteckformige bewegliche Scheibe 4 ist an zwei aneinandergrenzenden Seitenkanten über Federelemente 91, 94 mit Exzentermotoren 71, 72 verbunden, die von einer Steuereinrichtung 70 angesteuert werden. Die beiden anderen Seitenkanten der beweglichen Scheibe 4 sind über Federelemente92, 93 mit dem Kameragehäuse 1 (Fig. 1) verbunden.

Alternativ kann auch nur ein Exzentermotor vorgesehen werden, der über senkrecht zur Scheibenebene gelagerte Hebel mit zwei aneinandergrenzenden Seitenkanten der beweglichen Scheibe 4 verbunden ist und die bewegliche Scheibe 4 mit vorgegebener Bewegungsfrequenz auslenkt.

Die Reihenfolge der optischen Elemente der erfindungsgemäßen Vorrichtung zur Verbesserung der Bildqualität von Einstellscheiben sowie die Ausrichtung der mattierten und unmattierten sowie der mit der Formateinzeichnung versehenen Seite oder der glatten Seite ist für den gewünschten Effekt grundsätzlich beliebig. Vom Kameraobjektiv gesehen, d.h. in Richtung des Aufnahmestrahlenganges sind dementsprechend folgende Reihenfolgen besonders vorteilhaft:
- Unmattierte Glasseite der beweglichen Scheibe, mattierte Glasseite der beweglichen Scheibe, Glasseite mit Formateinzeichnung der stationären Scheibe, normale Glasseite der stationären Scheibe;
- Mattierte Glasseite der beweglichen Scheibe, unmattierte Glasseite der beweglichen Scheibe, Glasseite mit Formateinzeichnung der stationären Scheibe, normale Glasseite der stationären Scheibe;
- Normale Glasseite der stationäre Scheibe, Glasseite mit Formateinzeichnung der stationäre Scheibe, mattierte Glasseite der beweglichen Scheibe, unmattierte Glasseite der beweglichen Scheibe.

Außerdem kann zwischen den beiden Platten ein Medium mit unterschiedlichem Brechungsindex angeordnet sein.

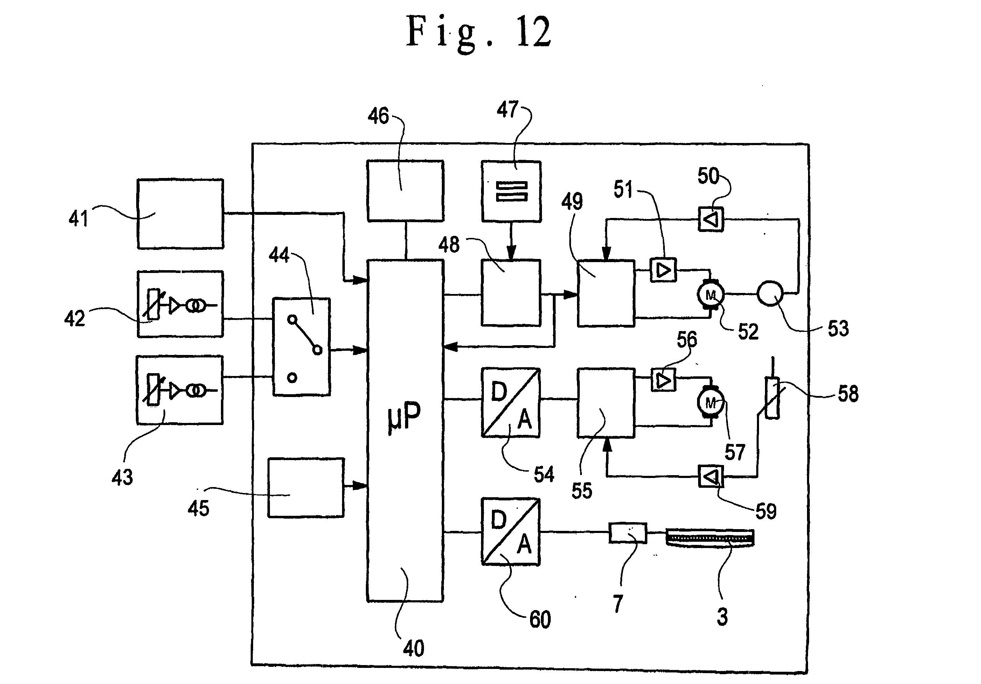

Mittels einer nachstehend anhand der Fig. 12 beschriebenen Schaltungsanordnung wird die bewegliche Scheibe 4 durch die Exzentermotoren 71, 72 in Schwingungen mit einer Bewegungsfrequenz versetzt, bei der die Körnigkeit der beweglichen Scheibe 4 visuell wird. Durch die Sicherstellung ungleichförmiger Bewegungen sowie unregelmäßiger Bewegungen der beweglichen Scheibe 4 und eine Beeinflussung der Antriebseinrichtung 71, 72 durch die Bildfrequenz der Filmkamera werden zusätzlich Interferenzerscheinungen sowie periodisch wiederkehrende Belichtungen bestimmter Punkte der Bildbeurteilungsvorrichtung vermieden.

Eine Sonderform der Bewegung der beweglichen Scheibe 4 wird dadurch erzielt, daß die von den Exzentermotoren 71, 72 ausgehenden periodischen Bewegungen in zwei zueinander senkrechte Richtungen verlaufen, so daß die Form der resultierende Bewegung vom Frequenzverhältnis und vom Phasenunterschied der beiden erzeugenden Bewegungen abhängt. Daraus entstehen bei rationalem Frequenzverhältnis geschlossene Figuren, die den Eindruck einer sich langsam wandelnden Figur, die in der Physik als Lissajousche Figuren bezeichnet werden, wenn sich die Frequenzen nur geringfügig unterscheiden.

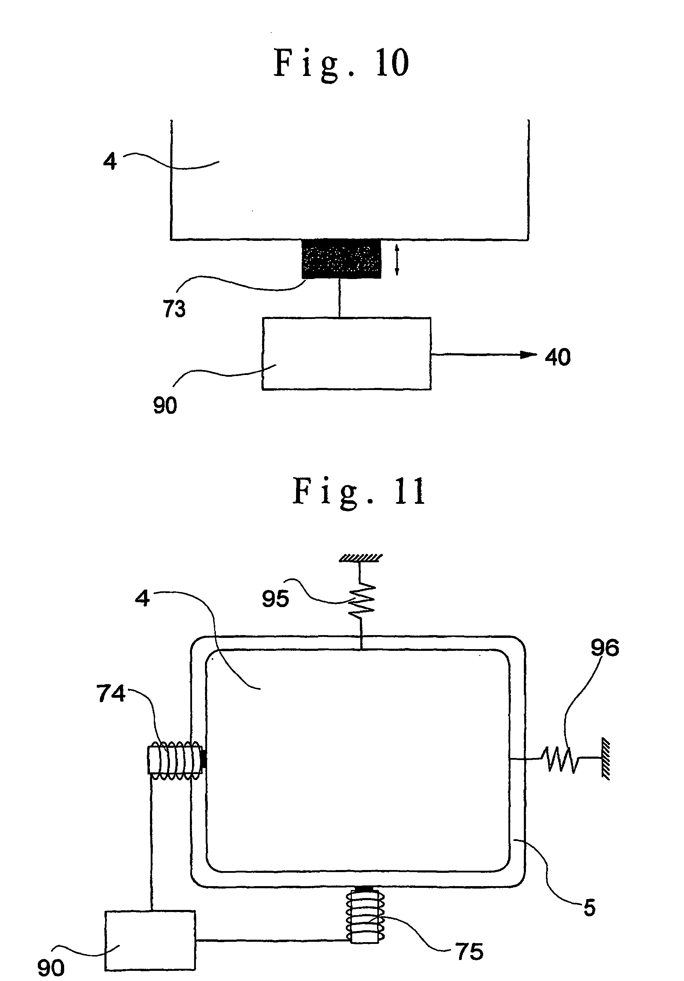

Eine in Figur 10 dargestellte alternative Antriebseinrichtung besteht aus einem Piezoelement 73, dessen äußere Abmessungen beim Anlegen eines elektrischen Feldes sich ändern und damit zur Übertragung von Schwingungen auf die bewegliche Scheibe 4 ausgenutzt werden können. Das Piezoelement 73 ist mit einem Ozillator 90 verbunden, der wiederum an die in Fig. 12 dargestellte übergeordnete Steuereinrichtung der Filmkamera angeschlossen ist.

Ein weiteres Ausführungsbeispiel einer Antriebseinrichtung zur Übertragung von Schwingungen auf die bewegliche Scheibe 4 ist in Figur 11 dargestellt und besteht aus zwei Hubmagneten oder Tauchspulen 74, 75, deren Anker mit zwei aneinandergrenzenden Seitenkanten der beweglichen Scheibe 4 verbunden sind. Die Hubmagnete 74, 75 sind an eine Steuereinrichtung 90 angeschlossen, die wiederum zur Beeinflussung durch die Bildfrequenz der Filmkamera mit der übergeordneten Steuereinrichtung der Filmkamera verbunden ist. Durch Abstützung der beweglichen Scheibe 4 über Federelemente 95, 96 an dem Kameragehäuse werden unregelmäßige Bewegungen der beweglichen Scheibe 4 erzeugt, die insbesondere in einem nicht ganzzahligen Verhältnis der Bildfrequenz der Filmkamera stehen.

Die Auslenkung der beweglichen Scheibe 4 kann auch so ausgebildet werden, daß diese im normalen Geschwindigkeitsbereich der Filmkamera im Resonanzschwingmodus betrieben wird.

In der in Figur 12 als Blockschaltbild dargestellten Steuereinrichtung ist ein Filmtransportmotor 52 zum Transport des Laufbildfilmes vorgesehen, der über ein Getriebe beispielsweise mit einem Greiferschaltwerk verbunden ist. Zusätzlich ist die Antriebswelle des Filmtransportmotors 52 fest mit einer Winkelgeberscheibe 53 verbunden, so daß mittels einer opto-elektronischen Positions-Abtasteinrichtung die Rotationsgeschwindigkeit bzw. -frequenz und gegebenenfalls die exakte Stellung des Filmtransportmotors 52 erfasst und über einen Vertärker 51 an einen Drehzahlregler 49 weitergeleitet werden kann.

Der Istwert der Transportgeschwindigkeit wird sowohl dem Drehzahlregler 49 als auch einem Mikroprozessor 40 zugeführt. Der Drehzahlregler 49 ist zusätzlich mit einem Sollwert der Transportgeschwindigkeit beaufschlagt. Dieser Sollwert wird von einem Syntheziser 48 abgegeben, dessen Eingänge sowohl mit einem Oszillator 47, der eine Referenzfrequenz an den Synthesizer 48 abgibt, als auch mit einem Ausgang des Mikroprozessors 40 verbunden.

Die Sollfrequenz der Transportgeschwindigkeit wird zusätzlich auf einen Eingang des Mikroprozessors 40 zurückgekoppelt. Der Drehzahlregler 49 führt sowohl eine Geschwindigkeitsregelung in Abhängigkeit von dem vom Synthesizer 48 abgebenen Sollwert als auch einen Phasenvergleich zwischen dem Istwert und dem Sollwert des Phasenwinkels durch.

Ein Sollwert des Blendenöffnungswinkels wird von dem Mikroprozessor 40 über einen Digital/Analog-Wandler 54 an einen Positionsregler 55 abgegeben, der zusätzlich mit einem Istwert des Blendenöffnungswinkels beaufschlagt ist. Über einen Verstärker 59 steuert der Positionsregler 55 einen Blendenverstellmotor 57 an, der vorzugsweise mit der Spiegelblendenwelle verbunden ist, mit der Spiegelblende rotiert und bei entsprechender Ansteuerung durch den Positionsregler 55 eine Relativbewegung des Blendenverstellflügels in Bezug auf die rotierende Spiegelblende bewirkt.

Der Blendenverstellflügel der Spiegelblende ist mit einem Potentiometer 58 verbunden, das ein der Stellung des Blendenverstellflügels in Bezug auf die Spiegelblende entsprechendes Signal sowohl im Stillstand als auch im Lauf über einen zweiten Verstärker 56 an den Positionsregler 55 abgibt

Zusätzlich kann im Bereich der verstellbaren Umlaufblende ein optischer Sensor 45 angeordnet werden, der im Lauf der verstellbaren Spiegelblende den jeweiligen Blendenöffnungswinkel, d.h. die Öffnungszeit der Umlaufblende erfaßt und an eine weiteren Eingang des Mikroprozessors 40 abgibt, so daß Systemtoleranzen eliminiert werden und eine zusätzliche Vergleichseingabe in digitaler Form an den Mikroprozessor 40 bewerkstelligt wird.

Der Mikroprozessor 40 ist mit einem Speicher 46 verbunden, der vorzugsweise aus einem Festwertspeicher und einem Speicher mit wahlfreiem Zugriff besteht. Ein zusätzlicher Eingang des Mikroprozessors 40 ist über einen Multiplexer 44 mit einer Fembedienungseinheit 42, 43 verbunden, über die Sollwerte für die Transportgeschwindigkeit und den Blendenöffnungswinkel eingestellt werden können, die mittels einer Programmtaste an der Fernbedienungseinheit bzw. einer Programmtaste an der Laufbildkamera ausgelöst werden.

Über eine serielle oder parallele Schnittstelle ist der Mikroprozessor 40 mit einem Programmiergerät 41 verbindbar, mit dem Sollwerte der Transportgeschwindigkeit und des Blendenöffnungswinkels vorprogrammierbar sind. Die vorprogrammierten Daten enthalten vorzugsweise Anfangs-und Endwerte der Transportgeschwindigkeit und des Blendenöffnungswinkels sowie der Zeit, innerhalb der die Änderung erfolgen soll. Die mittels des Programmiergerätes 41 eingegebenen Daten werden im Speicher 46 gespeichert und mit einer Programmtaste an der Laufbildkamera bzw. der Programmtaste an der Fernbedienungseinheit als Abfolge von Programmschritten unterschiedlicher Transportgeschwindigkeit und unterschiedlichen Blendenöffnungswinkels ausgelöst.

Über die Fembedienungseinheit 42, 43 können sowohl der Blendenöffnungswinkel als auch die Transportgeschwindigkeitverändert werden. Die an der Fernbedienungseinheit 42, 43 eingestellten Werte werden über einen Analog/Digital-Wandler an den Mikroprozessor 40 abgegeben, der den digitalen Wert des Blendenöffnungswinkels an den Digital/Analog-Wandler 54 für die Regelung des Blendenöffnungswinkels weiterleitet.

Ebenfalls über Analog/Digital-Wandler erhält der Mikroprozessor 40 einen Wert der Transportgeschwindigkeit, mit dem er den nachgeschalteten Synthesizer 48 mit einem festen digitalen Wert stabil einstellt Anstelle einer Analog/Digital-Umwandlung kann selbstverständlich auch ein Spannungs/Frequenz-Wandler verwendet werden.

Mit der Eingabe des Istwertes der Transportgeschwindigkeit in den Mikroprozessor 40 besteht eine einfache Möglichkeit,den jeweiligen Blendenöffnungswinkel zu ermitteln. Durch die Kenntnis der momentanen Transportgeschwindigkeit kann im Mikroprozessor 40 der jeweilige Blendenöffnungswinkeldurch die über den optischen Sensor erfassten Werte jeder Geschwindigkeit ausgerechnet werden, so daß der Blendenöffnungswinkel z.B. auch in der Hochlaufphase überprüft und gegebenenfalls korrigiert werden kann.

Über einen Digital-Analog-Wandler oder einen Spannungs-Frequenz-Wandler 50 ist die Antriebseinrichtung 7 zur Erzeugung von Schwingungen der Vorrichtung zur Bildbeurteilung 3 mit dem Mikroprozessor 40 verbunden. In Abhängigkeit von der Bildfrequenz und/oder der Bildhelligkeit gibt der Mikroprozessor 40 ggf. über den Digital-Analog-Wandler oder den Spannungs-Frequenz-Wandler 50 Steuersignale an eine der Antriebseinrichtung 7 zugeordnete Steuereinrichtung oder unmittelbar an die Antriebseinrichtung 7 ab, so daß diese je nach ihrer Ausbildung die Vorrichtung zur Bildbeurteilung 3 mit einer Bewegungsfrequenz ansteuert, die vorzugsweise in einem nicht ganzzahligen Verhältnis zur Bildfrequenz der Filmkamera steht.

Durch die Beeinflussung der Bewegungsfrequenz der beweglichen Scheibe durch die Bildfrequenz der Laufbildkamera können die Frequenzen so aufeinander abgestimmt werden, daß keine störenden Interferenzerscheinungen auftreten, wobei die Frequenz der Bewegung oberhalb der Auflösung des menschlichen Auges von ca. 60 Hz oder der Auflösung des Video-Assist liegt. Zur Unterdrückung der Körnigkeit der Mattscheibe reichen hierbei bereits geringe Auslenkungen der beweglichen Scheibe gegenüber der stationären Scheibe von wenigen zehntel Millimetern aus.

Insbesondere kann durch die Kopplung der Frequenzen vermieden werden, daß die Frequenz der beweglichen Scheibe gleich oder ein ganzes Vielfaches der Bildrequenz der Film- oder Videokamera ist, da die Kamera die bewegliche Scheibe unter diesen Umständen immer in der gleichen Stellung auf dem Bild zeigt. Man erhält hier die Situation als würde die Scheibe nicht bewegt, wodurch die Körnigkeit hervortreten würde. Gleiches gilt für halbzahlige Vielfache, bei denen sich zwei Stellungen abwechseln. Günstig sind dagegen alle Verhältnisse zwischen Bewegungsfrequenz der beweglichen Scheibe und Bildaufnahmefrequenz und Videofrequenz bzw. Wiederholfrequenz speziell der Videoausspiegelungseinrichtung, bei denen von der Kamera keine oder nur nach längerer Zeit periodisch wiederkehrende Stellung der Scheibe von der Videokamera aufgenommen würde.

Auch geringe Abweichungen der Bewegungsfrequenz der beweglichen Scheibe von der Bildfrequenz bzw. einem Vielfachen davon wirken sich negativ aus, da Schwebungen zwischen den Frequenzen entstehen, die vom Betrachter als unangenehm empfunden werden. Durch entsprechende Einstellung der Frequenzverhältnisse kann dies bei der erfindungsgemäßen Vorrichtung vermieden werden.

Durch die Verknüpfung der Steuerung des Filmtransportmechanismus, der rotierenden, verstellbaren Spiegelblende und der Vorrichtung zur Bildbeurteilung 3 mittels des Mikroprozessors 40 kann die Steuerung der Bewegungsfrequenz der Vorrichtung zur Bildbeurteilung 3 zeitlich oder geschwindigkeitsmäßig mit der Bildfrequenz der Filmkamera bzw. Videofrequenz der Videoausspiegelungseinrichtung gekoppelt werden, wobei unabhängig voneinander die Transportgeschwindigkeit des Laufbildfilmes und die Belichtungszeit der vorzugsweise mit einem Verstellsektor versehenen rotierenden Spiegelblende in die Regelung der Bewegungsfrequenz eingehen kann. Weiterhin kann die Stellung einer zusätzlichen, beispielsweise als Irisblende am Aufnahmeobjektiv 10 ausgebildeten Blende und damit die gesteuerte Bildhelligkeit in die Steuerung der Antriebseinrichtung für die Vorrichtung zur Bildbeurteilung 3 einfließen.

Die Erfindung beschränkt sich in ihrer Ausführung nicht auf die vorstehend angegebenen bevorzugten Ausführungsbeispiele, sondern es ist eine Anzahl von Varianten denkbar, welche von der in der Zeichnung und Beschreibung dargestellten Lösung auch bei grundsätzlich andersgearteten Ausführungen Gebrauch macht. So könnten beispielsweise auch Videokameras mit einem Suchersystem versehen werden, das dem Suchersystem einer Laufbildkamera entspricht, und die erfindungsgemäße Vorrichtung zur Verbesserung der Bildqualität einer Einstellscheibe aufweist.

## Patentansprüche

1. Vorrichtung in abbildenden optischen Systemen einer Laufbild-Filmaufnahmekamera mit mindestens einer beweglich angeordneten, lichtdurchlässigen Scheibe (4; 4a, 4b, 4c), insbesondere einer Mattscheibe oder Faserplatte, einer parallel zur Scheibenebene, der beweglichen Scheibe (4; 4a, 4b, 4c) angeordneten stationäre Scheibe (5; 5a, 5b) mit einer Bildfeldmarkierung (8; 81, 82) und einer die bewegliche Scheibe (4; 4a, 4b, 4c) in der Scheibenebene bewegenden Antriebseinrichtung (7; 71 - 75), die die bewegliche Scheibe (4; 4a, 4b, 4c) mit einer von der Bildfrequenz der Laufbild-Filmaufnahmekamera oder der Videofrequenz einer Videoausspiegelungseinrichtung (28, 29) der Laufbild-Filmaufnahmekamera abhängigen Frequenz bewegt.

2. Vorrichtung nach Anspruch 1, **dadurch gekennzeichnet, dass** die Bewegungsfrequenz der Antriebseinrichtung (7; 71 - 75) zeitlich oder bezüglich der Geschwindigkeit mit der Bildfrequenz der Laufbild-Filmaufnahmekamera oder der Videofrequenz der Videoausspiegelungseinrichtung (28, 29) der Laufbild-Filmaufnahmekamera gekoppelt ist.

3. Vorrichtung nach Anspruch 2, **dadurch gekennzeichnet, dass** die Bewegungsfrequenz der Antriebseinrichtung (7; 71 - 75) in einem nicht ganzzahligen Verhältnis zur Bildfrequenz der Laufbild-Filmaufnahmekamera oder der Videofrequenz der Videoausspiegelungseinrichtung (28,29) steht.

4. Vorrichtung nach mindestens einem der Ansprüche 1 bis 3, **dadurch gekennzeichnet, dass** die mit der beweglichen Scheibe (4; 4a, 4b, 4c) verbundene Antriebseinrichtung (7; 71 - 75) die bewegliche Scheibe (4; 4a, 4b, 4c) mit einer von der Helligkeit des aufzunehmenden Bildes oder Motivs abhängigen Frequenz bewegt.

5. Vorrichtung nach mindestens einem der voranstehenden Ansprüche, **dadurch gekennzeichnet, dass** die bewegliche Scheibe (4; 4a, 4b, 4c) zumindest zeitweise von der Antriebseinrichtung (7; 71 - 75) bewegt wird.

6. Vorrichtung nach Anspruch 5, **dadurch gekennzeichnet, dass** die bewegliche Scheibe (4; 4a, 4b, 4c) im "Standby-Modus" der Laufbild-Filmaufnahmekamera bewegt und im "Run-Modus" der Laufbild-Filmaufnahmekamera angehalten wird.

7. Vorrichtung nach mindestens einem der Ansprüche 1 bis 6, **dadurch gekennzeichnet, dass** die bewegliche Scheibe (4; 4a, 4b, 4c) unabhängig vom Betriebszustand der Laufbild-Filmaufnahmekamera mit einer hohen Bewegungsfrequenz bewegt wird.

8. Vorrichtung nach mindestens einem der voranstehenden Ansprüche, **dadurch gekennzeichnet, dass** die bewegliche Scheibe (4; 4a, 4b, 4c) so ausgelenkt wird, dass sie im normalen Geschwindigkeitsbereich der Laufbild-Filmaufnahmekamera im Resonanzschwingmodus betrieben wird.

9. Vorrichtung nach mindestens einem der voranstehenden Ansprüche, **dadurch gekennzeichnet, dass** die Antriebseinrichtung (7; 71 - 75) über eine Getriebeeinrichtung mit dem Film-Transportmechanismus (52) der Laufbild-Filmaufnahmekamera verbunden ist.

10. Vorrichtung nach mindestens einem der voranstehenden Ansprüche 1 bis 9, **dadurch gekennzeichnet, dass** die Antriebseinrichtung (7; 71 - 75) mit einem Blendenantrieb (57) der Laufbild-Filmaufnahmekamera verbunden ist.

11. Vorrichtung nach mindestens einem der voranstehenden Ansprüche, **dadurch gekennzeichnet, dass** die Antriebseinrichtung (7; 71 - 75) aus mindestens einem mit der beweglichen Scheibe (4; 4a, 4b, 4c) mittelbar oder unmittelbar verbundenen Exzentermotor (71, 72) besteht.

12. Vorrichtung nach Anspruch 11, **dadurch gekennzeichnet, dass** der Exzentermotor (71, 72) über mindestens einen senkrecht zur Scheibenebene drehbar gelagerten Hebel mit mindestens einer Seitenkante der beweglichen Scheibe (4; 4a, 4b, 4c) verbunden ist.

13. Vorrichtung nach mindestens einem der voranstehenden Ansprüche, **dadurch gekennzeichnet, dass** die Antriebseinrichtung (7; 71 - 75) aus mindestens einem mit einer Seitenkante der beweglichen Scheibe (4; 4a, 4b, 4c) verbundenen Piezoelement (73) besteht.

14. Vorrichtung nach mindestens einem der voranstehenden Ansprüche, **dadurch gekennzeichnet, dass** die Antriebseinrichtung (7; 71 - 75) über ein induktives oder kapazitives Feld berührungslos auf die bewegliche Scheibe (4; 4a, 4b, 4c) einwirkt.

15. Vorrichtung nach mindestens einem der voranstehenden Ansprüche, **dadurch gekennzeichnet, dass** der Abstand zwischen der beweglichen Scheibe (4; 4a, 4b, 4c) und der stationären Scheibe (5; 5a, 5b) minimal ist

16. Vorrichtung nach mindestens einem der voranstehenden Ansprüche, **dadurch gekennzeichnet, dass** die bewegliche Scheibe (4; 4a, 4b, 4c) so gelagert ist, dass die bewegliche Scheibe (4; 4a, 4b, 4c) ausschließlich in ihrer Scheibenebene beweglich ist

17. Vorrichtung nach mindestens einem der voranstehenden Ansprüche, **dadurch gekennzeichnet, dass** die bewegliche Scheibe (4; 4a, 4b, 4c) eine exzentrische Kreisbewegung ausführt.

18. Vorrichtung nach mindestens einem der voranstehenden Ansprüche, **dadurch gekennzeichnet, dass** die bewegliche Scheibe (4; 4a, 4b, 4c) eine unregelmäßige Bewegung ausführt.

19. Vorrichtung nach Anspruch 18, **dadurch gekennzeichnet, dass** die bewegliche Scheibe (4; 4a, 4b, 4c) eine Bewegung ausführt, die aus der Überlagerung von zwei in zueinander senkrechten Richtungen verlaufenden, periodischen Bewegungen resultiert (Lissajoussche Figuren).

20. Vorrichtung nach mindestens einem der voranstehenden Ansprüche, **dadurch gekennzeichnet, dass** die bewegliche Scheibe (4; 4a, 4b, 4c) eine Bewegung ausführt, die der Bewegung einer Schwinge eines Viergelenkgetriebes gleicht.

21. Vorrichtung nach mindestens einem der voranstehenden Ansprüche, **dadurch gekennzeichnet, dass** zumindest ein Teil der Seitenkanten der beweglichen Scheibe (4; 4a, 4b, 4c) elastisch (91 - 96) derart abgestützt ist, dass die bewegliche Scheibe (4; 4a, 4b, 4c) in ihrer Scheibenebene federnd gelagert ist.

22. Vorrichtung nach mindestens einem der voranstehenden Ansprüche, **dadurch gekennzeichnet, dass** die bewegliche Scheibe (4a, 4b, 4c) aus zwei zueinander parallelen, lichtdurchlässigen Platten (4a, 4b), wobei eine innenliegende Seite eine lichtstreuende Oberfläche aufweist, und einem die Platten (4a, 4b) miteinander verbindenden Kittmaterial (4c) besteht.

23. Vorrichtung nach Anspruch 22, **dadurch gekennzeichnet, dass** das Material der Platten (4a, 4b; 5) einen wenigstens um einen Faktor 1,1 höheren Brechungsindex als das Kittmaterial (4c) oder das optische Medium (6) aufweist.

24. Vorrichtung nach mindestens einem der voranstehenden Ansprüche 1 bis 21, **dadurch gekennzeichnet, dass** die bewegliche Scheibe (4) und die stationäre Scheibe (5) mit Bildfeldmarkierung (8; 81, 82) aus zueinander parallelen, lichtdurchlässigen Platten bestehen, zwischen denen sich ein optisches Medium (6) mit einem Brechungsindex ungleich eins befindet.

25. Vorrichtung nach mindestens einem der Ansprüche 22 bis 24, **dadurch gekennzeichnet, dass** die Platten (4; 4a, 4b; 5) aus Gläsern bestehen, deren Brechungindizes um einen Faktor 1,15 bis 1,3 größer ist als der Brechungsindex des Kittmaterials (4c) oder des optischen Mediums (6).

26. Vorrichtung nach mindestens einem der vorangehenden Ansprüche, **dadurch gekennzeichnet, dass** eine kamerainterne Lichtquelle (19) die stationäre Scheibe (5; Sa, 5b) anstrahlt.

27. Vorrichtung nach mindestens einem der voranstehenden Ansprüche, **gekennzeichnet durch** eine Anordnung der mit ihrer unmattierten Seite dem Kameraobjektiv (10) zugewandten beweglichen Scheibe (4; 4a, 4b, 4c) und der mit ihrer Formateinzeichnung (8; 81, 82) der mattierten Seite der beweglichen Scheibe (4; 4a, 4b, 4c) zugewandten stationären Scheibe (5; 5a, 5b).

28. Vorrichtung nach mindestens einem der voranstehenden Ansprüche 1 bis 26, **gekennzeichnet durch** eine Anordnung der mit ihrer mattierten Seite dem Kameraobjektiv (10) zugewandten beweglichen Scheibe (4; 4a, 4b, 4c) und der mit ihrer Forinateinzeichnung (8; 81, 82) der unmattierten Seite der beweglichen Scheibe (4; 4a, 4b, 4c) zugewandten stationären Scheibe (5; 5a, 5b).

29. Vorrichtung nach Anspruch 27 oder 28, **dadurch gekennzeichnet, dass** die stationäre Scheibe (5) in Einfallsstrahlenrichtung hinter der beweglichen Scheibe (4) angeordnet ist und auf ihrer von der Formateinzeichnung abgewandten Seite zur Bildung einer Feldlinse konvex ausgebildet ist.

30. Vorrichtung nach mindestens einem der voranstehenden Ansprüche 1 bis 26, **gekennzeichnet durch** eine Anordnung der mit ihrer normalen Glasseite dem Kameraobjektiv (10) zugewandten stationären Scheibe (5; 5a, 5b) und der mit ihrer mattierten Seite der Formateinzeichnung (8; 81, 82) der stationären Scheibe (5; Sa, 5b) zugewandten unmattierten Seite der beweglichen Scheibe (4; 4a, 4b, 4c).

## Claims

1. Device in optical representation systems of a motion picture film recording camera with at least one movably mounted translucent disc (4; 4a, 4b, 4c), more particularly a matt disc or fibre plate, a stationary disc (5; 5a, 5b) with image field marking (format marks 8; 81, 82) mounted parallel to the plane of the movable disc (4; 4a, 4b, 4c), and a drive device (7; 71-75) which moves the movable disc (4; 4a, 4b, 4c) in the plane of the disc and which moves the movable disc (4; 4a, 4b, 4c) with a frequency dependent on the image frequency of the motion picture film recording camera or the video frequency of a video reflecting device (28, 29) of the motion picture film recording camera.

2. Device according to claim 1 **characterised in that** the motion frequency of the drive device (7; 71-75) is coupled in terms of time or speed to the image frequency of the film camera or the video frequency of the video reflecting device (28, 29) of the film camera.

3. Device according to claim 2 **characterised in that** the motion frequency of the drive device (7; 71-75) is in a non whole number ratio to the image frequency of the film camera or the video frequency of the video reflecting device (28, 29).

4. Device according to at least one of claims 1 to 3 **characterised in that** the drive device (7; 71-75) connected to the movable disc (4; 4a, 4b, 4c) moves the movable disc (4; 4a, 4b, 4c) with a frequency which is dependent on the brightness of the image or subject to be taken.

5. Device according to at least one of the preceding claims **characterised in that** the movable disc (4; 4a, 4b, 4c) is moved at least at times by the drive device (7,71-75).

6. Device according to claim 5 **characterised in that** the movable disc (4; 4a, 4b,4c) is moved in standby mode of the film camera and is stopped in the run-mode of the film camera.

7. Device according to at least one of claims 1 to 6 **characterised in that** the movable disc **(4, 4a, 4b, 4c)** is moved independently of the operating state of the film camera with a high motion frequency.

8. Device according to at least one of the preceding claims **characterised in that** the movable disc (4; 4a, 4b, 4c) is deflected so that it is operated in the normal speed range of the film camera in the resonance vibration mode.

9. Device according to at least one of the preceding claims **characterised in that** the drive device (7; 71-75) is connected through a gear mechanism to the film transport mechanism (52) of the film camera.

10. Device according to at least one of the preceding claims 1 to 9 **characterised in that** the drive device (7, 71-75) is connected to an aperture drive (57) of the film camera.

11. Device according to at least one of the preceding claims **characterised in that** the drive device (7, 71-75) consists of at least one eccentric motor (71, 72) which is connected directly or indirectly to the movable disc (4, 4a, 4b, 4c).

12. Device according to claim 11 **characterised in that** the eccentric motor (71, 72) is connected to at least one side edge of the movable disc (4; 4a,4b, 4c) through at least one lever which is mounted rotatable perpendicular to the plane of the disc.

13. Device according to at least one of the preceding claims **characterised in that** the drive device (7, 71-75) consists of at least one piezo element (73) connected to a side edge of the movable disc (4, 4a, 4b, 4c).

14. Device according to at least one of the preceding claims **characterised in that** the drive device (7, 71-75) acts through an inductive or capacitive field contactlessly on the movable disc (4, 4a, 4b, 4c).

15. Device according to at least one of the preceding claims **characterised in that** the spacing between the movable disc (4, 4a, 4b, 4c) and the stationary disc (5, 5a, 5b) is minimal.

16. Device according to at least one of the preceding claims **characterised in that** the movable disc (4, 4a, 4b, 4c) is positioned so that the movable disc (4, 4a, b, 4c) is movable solely in the plane of the disc.

17. Device according to at least one of the preceding claims, **characterised in that** the movable disc (4, 4a, 4b, 4c) executes an eccentric circular movement.

18. Device according to at least one of the preceding claims **characterised in that** the movable disc (4, 4a, 4b, 4c) executes an irregular movement.

19. Device according to claim 18 **characterised in that** the movable disc (4, 4a, 4b, 4c) executes a movement which results from superimposing two periodic movements running in directions at right angles to each other (Lissajoussch figures).

20. Device according to at least one of the preceding claims **characterised in that** the movable disc (4, 4a, 4b, 4c) executes a motion which is similar to the movement of an arm of a four-armed gearing.

21. Device according to at least one of the preceding claims **characterised in that** at least a part of the side edges of the movable disc (4; 4a, 4b, 4c) is supported elastically (91-96) so that the movable disc (4; 4a, 4b, 4c) is resiliently mounted in the plane of the disc.

22. Device according to at least one of the preceding claims **characterised in that** the movable disc (4a, 4b, 4c) consists of two parallel translucent plates (4a, 4b) whereby an inner side has a light-scattering surface, and of a cement material (4c) which bonds the two plates (4a, 4b) together.

23. Device according to claim 22 **characterised in that** the material of the plates (4a, 4b, 5) has a refractive index which is higher by at least a factor 1.1 than the cement material (4c) or the optical medium (6).

24. Device according to at least one of the preceding claims 1 to 21 **characterised in that** the movable disc (4) and the stationary disc (5) with image field markings (8, 81, 82) consist of parallel translucent plates between which there is an optical medium (6) having a refractive index which is not equal to one.

25. Device according to at least one of claims 22 to 24 **characterised in that** the - plates (4, 4a, 4b; 5) are made from glass whose refractive indices are greater by a factor of 1.15 to 1.3 than the refractive index of the cement material (4c) or the optical medium (6).

26. Device according to at least one of the preceding claims **characterised in that** a light source (19) inside the camera lights up the stationary disc (5; 5a, 5b).

27. Device according to at least one of the preceding claims **characterised by** an arrangement of the movable disc (4, 4a, b, 4c) which faces the camera lens (10) with its non-matted side, and of the stationary disc (5, 5a, 5b) which faces the matted side of the movable disc (4, 4a, 4b, 4c) with its format marks (8, 81, 82).

28. Device according to at least one of the preceding claims 1 to 27 **characterised by** an arrangement of the movable disc (4, 4a, 4b, 4c) which faces the camera lens (10) by its matted side and of the stationary disc (5, 5a, 5b) which faces the non matted side of the movable disc by its format marks (8, 81, 82).

29. Device according to claim 27 or 28 **characterised in that** the stationary disc (5) is mounted in the incident beam direction behind the movable disc (4) and is formed convex on its side remote from the format marks to form the field lens.

30. Device according to at least one of the preceding claims 1 to 26 **characterised by** an arrangement of the stationary disc (5, 5a, 5b) facing the camera lens (10) with its normal glass side, and of the non-matted side of the movable disc (4, 4a, 4b, 4c) which faces with its matted side the format marks (8, 81, 82) of the stationary disc (5, 5a, 5b).

## Revendications

1. Dispositif installé dans des systèmes de représentation optiques d'une caméra de prise de vues comportant au moins une vitre transparente, agencée (4 ; 4a, 4b, 4c) de manière mobile, en particulier une vitre mate ou une plaque en fibres, une vitre stationnaire (5 ; 5a, 5b) située parallèlement à plan de la vitre mobile (4 ; 4a, 4b, 4c) comportant un repère du champ de prise de vues (8 ; 81, 82) et un dispositif d'entraînement (7 ; 71 - 75), déplaçant la vitre mobile (4 ; 4a, 4b, 4c) dans le plan de la vitre, dispositif qui fait bouger la vitre mobile (4 ; 4a, 4b, 4c) dans une fréquence dépendant de la fréquence d'images de la caméra de prise de vues ou de la fréquence vidéo d'un dispositif de visée vidéo (28, 29) de la caméra de prise de vues.

2. Dispositif selon la revendication 1, **caractérisé en ce que** la fréquence du mouvement du dispositif d'entraînement (7 ; 71 - 75) est couplée temporellement ou en vitesse, à la fréquence d'images de la caméra de prise de vues ou à la fréquence vidéo du dispositif de visée vidéo (28, 29) de la caméra de prise de vues.

3. Dispositif selon la revendication 2, **caractérisé en ce que** le rapport entre la fréquence du mouvement du dispositif d'entraînement (7 ; 71 - 75) et la fréquence d'images de la caméra de prise de vues ou la fréquence vidéo du dispositif de visée vidéo (28, 29) n'est pas un nombre entier.

4. Dispositif selon au moins l'une quelconque des revendications 1 à 3, **caractérisé en ce que** le dispositif d'entraînement (7 ; 71 - 75) relié à la vitre mobile (4 ; 4a, 4b, 4c) déplace la vitre mobile (4 ; 4a, 4b, 4c) à une fréquence qui dépend de la clarté de l'image ou du motif à enregistrer.

5. Dispositif selon au moins l'une quelconque des revendications précédentes, **caractérisé en ce que** la vitre mobile (4 ; 4a, 4b, 4c) est déplacée au moins par intermittence par le dispositif d'entraînement (7 ; 71 - 75).

6. Dispositif selon la revendication 5, **caractérisé en ce que** la vitre mobile (4 ; 4a, 4b, 4c) est déplacée lorsque la caméra de prise de vues est en "mode stand-by" et arrêtée lors que la caméra de prise de vues est en "mode run" .

7. Dispositif selon au moins l'une quelconque des revendications 1 à 6, **caractérisé en ce que** la vitre mobile (4 ; 4a, 4b, 4c) est déplacée indépendamment de l'état de fonctionnement de la caméra de prise de vues à une haute fréquence de mouvement.

8. Dispositif selon au moins l'une quelconque des revendications précédentes, **caractérisé en ce que** la vitre mobile (4 ; 4a, 4b, 4c) est déviée vers l'extérieur de manière à osciller à un mode résonant dans le domaine de vitesse normal de la caméra de prise de vues.

9. Dispositif selon au moins l'une quelconque des revendications précédentes, **caractérisé en ce que** le dispositif d'entraînement (7 , 71 - 75) est relié au mécanisme de transport de la pellicule (52) de la caméra de prise de vues par l'intermédiaire d'un dispositif à engrenage.

10. Dispositif selon au moins l'une quelconque des revendications précédentes 1 à 9, **caractérisé en ce que** le dispositif d'entraînement (7 ; 71 - 75) est relié à un dispositif d'entraînement du diaphragme (57) de la caméra de prise de vues.

11. Dispositif selon au moins l'une quelconque des revendications précédentes, **caractérisé en ce que** le dispositif d'entraînement (7 ; 71 - 75) est constitué d'au moins un moteur excentrique (71, 72) relié directement ou indirectement à la vitre mobile (4 ; 4a, 4b, 4c).

12. Dispositif selon la revendication 11, **caractérisé en ce que** le moteur excentrique (71, 72) est relié au moins à une arête latérale de la vitre mobile (4 ; 4a, 4b, 4c) par l'intermédiaire d'au moins un levier disposé de manière rotative perpendiculairement au plan de la vitre.

13. Dispositif selon au moins l'une quelconque des revendications précédentes, **caractérisé en ce que** le dispositif d'entraînement (7 ; 71 - 75) est constitué d'au moins un élément piézoélectrique (73) relié à une arête latérale de la vitre mobile (4 ; 4a, 4b, 4c).

14. Dispositif selon au moins l'une quelconque des revendications précédentes, **caractérisé en ce que** le dispositif d'entraînement (7 ; 71 - 75) agit sur la vitre mobile (4 ; 4a, 4b, 4c) par l'intermédiaire d'un champ inductif ou capacitif.

15. Dispositif selon au moins l'une quelconque des revendications précédentes, **caractérisé en ce que** la distance entre la vitre mobile (4 ; 4a, 4b, 4c) et la vitre stationnaire (5 ; 5a, 5b) est minime.

16. Dispositif selon au moins l'une quelconque des revendications précédentes, **caractérisé en ce que** la vitre mobile (4 ; 4a, 4b, 4c) est logée de manière à pouvoir bouger exclusivement sur son plan.

17. Dispositif selon au moins l'une quelconque des revendications précédentes, **caractérisé en ce que** la vitre mobile (4 ; 4a, 4b, 4c) effectue un mouvement circulaire excentrique.

18. Dispositif selon au moins l'une quelconque des revendications précédentes, **caractérisé en ce que** la vitre mobile (4 ; 4a, 4b, 4c) effectue un mouvement irrégulier.

19. Dispositif selon la revendication 18, **caractérisé en ce que** la vitre mobile (4 ; 4a, 4b, 4c) effectue un mouvement qui résulte de la superposition de deux mouvements périodiques passant par deux directions perpendiculaires entre elles (courbes de Lissajous).

20. Dispositif selon au moins l'une quelconque des revendications précédentes, **caractérisé en ce que** la vitre mobile (4 ; 4a, 4b, 4c) effectue un mouvement qui ressemble au mouvement d'une manivelle oscillante d'un quadrilatère articulé.

21. Dispositif selon au moins l'une quelconque des revendications précédentes, **caractérisé en ce qu'**au moins une partie des arêtes latérales de la vitre mobile (4 ; 4a, 4b, 4c) est soutenue de manière élastique (91 - 96) de telle façon que la vitre mobile (4 ; 4a, 4b, 4c) soit logée de manière amortie sur son plan.

22. Dispositif selon au moins l'une quelconque des revendications précédentes, **caractérisé en ce que** la vitre mobile (4 ; 4a, 4b, 4c) est constituée de deux plaques (4a, 4b) transparentes parallèles entre elles, le côté intérieur présentant une surface dispersive, et d'un matériau de masticage (4c) reliant les plaques (4a, 4b) l'une à l'autre.

23. Dispositif selon revendication 22, **caractérisé en ce que** le matériau des plaques (4a, 4b ; 5) présente un indice de réfraction supérieur d'au moins un facteur de 1,1 au matériau de masticage (4c) ou au fluide optique (6).

24. Dispositif selon au moins l'une quelconque des revendications précédentes 1 à 21, **caractérisé en ce que** la vitre mobile (4) et la vitre stationnaire (5) comportant un repère du champ de prise de vues (8 ; 81, 82) sont constituées de plaques transparentes parallèles entre elles entre lesquelles se trouve un fluide optique (6) d'un indice de réfraction différent de un.

25. Dispositif selon au moins l'une quelconque des revendications 22 à 24, **caractérisé en ce que** les plaques (4 ; 4a, 4b ; 5) sont constituées de verres dont l'indice de réfraction est supérieur d'un facteur de 1,15 à 1,3 à l'indice de réfraction du matériau de masticage (4c) ou du fluide optique (6).

26. Dispositif selon au moins l'une quelconque des revendications précédentes, **caractérisé en ce qu'**une source de lumière (19) interne à la caméra éclaire la vitre stationnaire (5 ; 5a, 5b).

27. Dispositif selon au moins l'une quelconque des revendications précédentes, **caractérisé par** une disposition de la vitre mobile (4 ; 4a, 4b, 4c) dont le côté non dépoli est dirigé vers l'objectif de la caméra (10) et de la vitre stationnaire (5 ; 5a, 5b) dont l'inscription du format (8 ; 81, 82) est dirigé vers le côté dépoli de la vitre mobile (4 ; 4a, 4b, 4c).

28. Dispositif selon au moins l'une quelconque des revendications précédentes 1 à 26, **caractérisé par** une disposition de la vitre mobile (4 ; 4a, 4b, 4c) dont le côté dépoli est dirigé vers l'objectif de la caméra (10) et de la vitre stationnaire (5 ; 5a, 5b) dont l'inscription du format (8 ; 81, 82) est dirigé vers le côté non dépoli de la vitre mobile (4 ; 4a, 4b, 4c).

29. Dispositif selon la revendication 27 ou 28, **caractérisé en ce que** la vitre stationnaire (5) est disposée dans le sens du rayon incident derrière la vitre mobile (4) et a une forme convexe sur son côté opposé à l'inscription de format pour former une lentille de champ.

30. Dispositif selon au moins l'une quelconque des revendications précédentes 1 à 26, **caractérisé par** une disposition de la vitre stationnaire (5 ; 5a, 5b) dont le côté en verre normal est dirigé vers l'objectif de la caméra (10) et de la vitre mobile (4 ; 4a, 4b, 4c) dont le côté dépoli présentant l'inscription du format (8 ; 81, 82) est dirigé vers le côté non dépoli de la vitre mobile (4 ; 4a, 4b, 4c).
